(19) **Europäisches Patentamt European Patent Office Office européen des brevets**

(11) **EP 4 424 417 A1**

(12) **EUROPEAN PATENT APPLICATION**
published in accordance with Art. 153(4) EPC

(43) Date of publication:
04.09.2024 Bulletin 2024/36

(21) Application number: 22886435.1

(22) Date of filing: 25.08.2022

(51) International Patent Classification (IPC):
$B01J\ 27/053$ (2006.01)    $B01D\ 53/94$ (2006.01)
$B01J\ 23/652$ (2006.01)    $B01J\ 37/08$ (2006.01)

(52) Cooperative Patent Classification (CPC):
B01D 53/94; B01J 23/652; B01J 27/053;
B01J 37/08

(86) International application number:
PCT/JP2022/032044

(87) International publication number:
WO 2023/074101 (04.05.2023 Gazette 2023/18)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: 28.10.2021 JP 2021176694

(71) Applicant: **Hitachi Zosen Corporation**
**Osaka-shi, Osaka 559-8559 (JP)**

(72) Inventors:
• **FUJIOKA, Koichi**
**Osaka-shi, Osaka 559-8559 (JP)**
• **SHONO, Emi**
**Osaka-shi, Osaka 559-8559 (JP)**
• **HIKAZUDANI, Susumu**
**Osaka-shi, Osaka 559-8559 (JP)**

(74) Representative: **Grünecker Patent- und**
**Rechtsanwälte**
**PartG mbB**
**Leopoldstraße 4**
**80802 München (DE)**

(54) **HYDROCARBON OXIDATION CATALYST, METHOD FOR PRODUCING SAME AND HYDROCARBON PROCESSING METHOD**

(57) A hydrocarbon oxidation catalyst according to the present invention includes a catalyst carrier containing zirconia; and an active metal supported on the catalyst carrier. The zirconia contains a monoclinic zirconia phase and a tetragonal zirconia phase. In the zirconia, a ratio of a peak intensity of the tetragonal zirconia phase to a peak intensity of the monoclinic zirconia phase in an X-ray diffraction measurement is 0.005 or more and less than 0.8, and the monoclinic zirconia phase has a crystallite diameter of 35Å or more and 115Å or less.

FIG. 1

**Description**

TECHNICAL FIELD

The present invention relates to a hydrocarbon oxidation catalyst, a method for producing the same, and a hydrocarbon processing method.

BACKGROUND ART

An internal combustion engine is known to operate with natural gas (mainly containing hydrocarbons such as methane) supplied as fuel gas. For example, in view of energy efficiency, such internal combustion engine is operated under conditions where some of the hydrocarbons in the fuel gas (e.g., approximately 3 to 7% of fuel methane in a two-stroke low-pressure gas engine and approximately 6 to 13% of fuel methane in a four-stroke low-pressure gas engine) are not burned. That is, exhaust gas from the internal combustion engine contains unburned hydrocarbons. The unburned hydrocarbons contain gases that have a higher greenhouse effect than carbon dioxide. Methane, for example, has 25 times more greenhouse effect than carbon dioxide. When such exhaust gas is released into the atmosphere, the unburned hydrocarbons such as methane are desired to be removed from the exhaust gas.

As a method for removing the unburned hydrocarbons from the exhaust gas, there has been known a method for oxidizing the unburned hydrocarbons using a catalyst to decompose them into carbon dioxide and water. A technique relating to a methane oxidation catalyst is disclosed in, for example, Patent Document 1 below.

Citation List

Patent Document

Patent Document 1: Japanese Unexamined Patent Application Publication (Translation of PCT Application) No. 2018-510767

SUMMARY OF THE INVENTION

PROBLEM TO BE SOLVED BY THE INVENTION

Patent Document 1 discloses a methane oxidation catalyst comprising a catalyst carrier and palladium as an active metal supported on the catalyst carrier, with an amount of palladium supported of 4% by mass. This catalyst has a relatively large amount of expensive palladium (active metal) supported. In view of cost reduction, however, it is required that hydrocarbons in the exhaust gas are oxidized and decomposed by a catalyst having a smaller amount of the active metal supported.

The present invention provides a hydrocarbon oxidation catalyst suitable for achieving good catalyst performance while suppressing the amount of active metal supported, a hydrocarbon processing method, and a method for producing the hydrocarbon oxidation catalyst.

MEANS FOR SOLVING THE PROBLEM

The present invention [1] includes a hydrocarbon oxidation catalyst, being a catalyst for oxidizing hydrocarbon, the hydrocarbon oxidation catalyst including a catalyst carrier comprising zirconia; and an active metal supported on the catalyst carrier, in which the zirconia contains a monoclinic zirconia phase and a tetragonal zirconia phase, a ratio of a peak intensity of the tetragonal zirconia phase to a peak intensity of the monoclinic zirconia phase in an X-ray diffraction measurement is 0.005 or more and less than 0.8, and the monoclinic zirconia phase has a crystallite diameter of 35Å or more and 115Å or less.

The present invention [2] includes the hydrocarbon oxidation catalyst described in [1], in which the catalyst carrier is oxoacid zirconia.

The present invention [3] includes the hydrocarbon oxidation catalyst described in [1] or [2], in which the oxoacid zirconia includes at least one selected from the group consisting of sulfated zirconia and tungstated zirconia.

The present invention [4] includes the hydrocarbon oxidation catalyst described in any one of the above-described [1] to [3], in which the active metal includes at least one selected from the group consisting of palladium, platinum, and ruthenium.

The present invention [5] includes the hydrocarbon oxidation catalyst described in any one of the above-described [1] to [4], in which the active metal includes palladium and an amount of the palladium supported is 0.1% by mass or more and less than 4% by mass.

The present invention [6] includes a hydrocarbon processing method including the step of bringing hydrocarbon into contact with the hydrocarbon oxidation catalyst according to any one of the above-described [1] to [5].

The present invention [7] includes a method for producing a hydrocarbon oxidation catalyst, including a first step of preparing a slurry containing a catalyst carrier raw material including zirconia, and an active metal; a second step of drying the slurry to obtain a powder; and a third step of calcining the powder at a temperature of 400°C or more and 600°C or less to produce the hydrocarbon oxidation catalyst according to any one of the above-described [1] to [5], in which the zirconia in the first step contains a monoclinic zirconia phase and a tetragonal zirconia phase, a ratio of a peak intensity of the tetragonal zirconia phase to a peak intensity of the monoclinic zirconia phase in an X-ray diffraction measurement is 0.005 or more and 0.85 or less, and the monoclinic zirconia phase has a crystallite diameter of 35Å or more and 115Å or less.

EFFECTS OF THE INVENTION

In the hydrocarbon oxidation catalyst of the present invention, as described above, the ratio of the peak intensity of the tetragonal zirconia phase to the peak intensity of the monoclinic zirconia phase by the X-ray diffraction measurement in the zirconia supporting the active metal is 0.005 or more and less than 0.8, and the monoclinic zirconia phase has a crystallite diameter of 35Å or more and 115Å or less. Therefore, the hydrocarbon oxidation catalyst is suitable for achieving good catalyst performance while suppressing the amount of the active metal supported. The hydrocarbon processing method including the step of bringing hydrocarbon into contact with such hydrocarbon oxidation catalyst is suitable for efficiently decomposing the hydrocarbon. In the method for producing the hydrocarbon oxidation catalyst according to the present invention, the above-described ratio of the zirconia used in the first step is 0.005 or more and 0.85 or less as measured by X-ray diffraction, the crystallite diameter of the monoclinic zirconia phase is 35Å or more and 115Å or less, and the calcination temperature in the third step is 400°C or more and 600°C or less. Therefore, the above-described hydrocarbon oxidation catalyst can be efficiently produced.

BRIEF DESCRIPTION OF THE DRAWINGS

FIG. 1 shows XRD patterns obtained for hydrocarbon oxidation catalysts of Examples 1 to 10 and Comparative Examples 1 to 5.

FIG. 2 shows XRD patterns obtained for various zirconia used as catalyst carrier raw materials in Examples 1 to 10 and Comparative Examples 1 to 5.

FIG. 3 is a graph showing a correlation between a methane oxidation activity ratio and a ratio (P2/P1) of a peak intensity P2 of a tetragonal zirconia phase to a peak intensity P1 of a monoclinic zirconia phase in XRD measurement for the hydrocarbon oxidation catalysts of Examples 1 to 10 and Comparative Examples 1 to 5.

FIG. 4 is a graph showing a correlation between the methane oxidation activity ratio and a crystallite diameter R1 of the monoclinic zirconia phase for the hydrocarbon oxidation catalysts of Examples 1 to 10 and Comparative Examples 1 to 5.

FIG. 5 is a graph showing a correlation of the methane oxidation activity ratio and a temperature $T_{50}$ ($CH_4$) relative to the percentage of sulfuric acid in a catalyst carrier for the hydrocarbon oxidation catalysts of Examples 1 to 3 and Comparative Examples 1 to 4.

DESCRIPTION OF THE EMBODIMENTS

A hydrocarbon oxidation catalyst as an embodiment of the present invention is a catalyst for oxidatively decomposing hydrocarbons and includes a catalyst carrier and an active metal supported on the catalyst carrier. When exhaust gas is released into the atmosphere, the hydrocarbon oxidation catalyst can be used to remove unburned hydrocarbons such as methane from the exhaust gas. Examples of the hydrocarbon in the exhaust gas include aliphatic hydrocarbons and alicyclic hydrocarbons. Examples of the aliphatic hydrocarbon include aliphatic saturated hydrocarbons and aliphatic unsaturated hydrocarbons. Examples of the aliphatic saturated hydrocarbon include methane, ethane, propane, butane, and pentane.

The catalyst carrier contains zirconia. The zirconia contains a monoclinic zirconia ($m$-$ZrO_2$) phase and a tetragonal zirconia ($t$-$ZrO_2$) phase. The zirconia contains a relatively large amount of monoclinic zirconia phase. Specifically, in the hydrocarbon oxidation catalyst, a ratio (P2/P1) of a peak intensity P2 of the tetragonal zirconia phase to a peak intensity P1 of the monoclinic zirconia phase in an X-ray diffraction (XRD) measurement is 0.005 or more and less than 0.8. The ratio (P2/P1) is an index of acidity of a surface of the hydrocarbon oxidation catalyst, and the ratio (P2/P1) of 0.005 or more is suitable for ensuring the surface acidity required for oxidation reaction such as methane oxidation reaction in the hydrocarbon oxidation catalyst, and thus for achieving good catalyst performance (The ratio (P2/P1) of less than 0.005 is not suitable for ensuring the surface acidity). From such a viewpoint, the ratio (P2/P1) is preferably 0.01 or more, more preferably 0.1 or more, even more preferably 0.2 or more, particularly preferably 0.3 or more. The ratio (P2/P1) is also an index of the amounts of the monoclinic zirconia phase and the tetragonal zirconia phase which is more stable than the monoclinic zirconia phase, and the ratio (P2/P1) of less than 0.8 is suitable for ensuring the monoclinic zirconia phase of which the active metal supported site is more likely to be activated than that of the tetragonal zirconia phase, and thus for achieving good catalyst performance (The ratio (P2/P1) of 0.8 or more is not suitable for ensuring the monoclinic zirconia phase). From such a viewpoint, the ratio (P2/P1) is preferably 0.7 or less, more preferably 0.6 or less, even more preferably 0.5 or less. In the XRD measurement, the peak intensity P1 of the monoclinic zirconia phase is an integral value of the intensity (cps) of the X-ray diffraction signal having a diffraction peak at $2\theta = 28.1°$ ($\theta$ denotes the Bragg angle). The peak intensity P2 of the tetragonal zirconia phase is an integral value of the intensity (cps) of the X-ray diffraction signal having a diffraction peak at $2\theta = 30.2°$. Specifically, the XRD measurement can be performed by a method to be described later regarding Examples.

The catalyst carrier is preferably oxoacid zirconia. Such a configuration is preferred to stabilize the tetragonal zirconia phase, which is unstable at room temperature (Bulk pure zirconia crystals are monoclinic at room temperature). Examples of the oxoacid zirconia include sulfated zirconia, tungstated zirconia, titanated zirconia, and phosphated zirconia. The oxoacid zirconia preferably includes at least one selected from the group consisting of sulfated zirconia and tungstated zirconia. The percentage of the oxo acid in the catalyst carrier is preferably 0.1% by mass or more, more preferably 0.3% by mass or more, even more preferably 0.5% by mass or more, and preferably 4% by mass or less, more preferably 3.5% by mass or less, even more preferably 3% by mass or less. These configurations are preferred to stabilize the tetragonal zirconia phase in the oxoacid zirconia so that it exists at the ratio (P2/P1) described above. The configuration in which the catalyst carrier is oxoacid zirconia is also preferred to acidify a surface of the hydrocarbon oxidation catalyst. Acidification of the hydrocarbon oxidation catalyst surface helps ensure catalytic activity.

The monoclinic zirconia phase has a crystallite diameter R1 of 35 Å or more and 115 Å or less. In view of ensuring an area where one crystallite of the monoclinic zirconia phase can support the active metal with a high degree of dispersion, the crystallite diameter R1 is 35Å or more, preferably 40Å or more, more preferably 50Å or more, even more preferably 60Å or more. In view of ensuring a crystallite surface area (in which the active metal is supported) per crystallite volume in the monoclinic zirconia phase, the crystallite diameter R1 is 115 Å or less, preferably 110 Å or less, more preferably 105 Å or less.

In view of ensuring an area where one crystallite of the tetragonal zirconia phase can support the active metal with a high degree of dispersion, the tetragonal zirconia phase has a crystallite diameter R2 of preferably 40Å or more, more preferably 45Å or more. In view of ensuring a crystallite surface area (in which the active metal is supported) per crystallite volume in the tetragonal zirconia phase, the crystallite diameter R2 is preferably 115 Å or less, more preferably 110 Å or less, even more preferably 105 Å or less. Such nanoparticle-level miniaturization of the tetragonal zirconia phase also helps stabilize tetragonal zirconia.

The crystallite diameters R1 and R2 can be determined based on the XRD measurement. Specifically, the crystallite diameter R1 of the monoclinic zirconia phase can be determined based on the full width at half maximum (FWHM) of a peak as the diffraction line width at $2\theta = 28.1°$ ($\theta$ denotes the Bragg angle) in the XRD measurement and the Scherrer equation ($D = K\lambda/B\cos\theta$). The crystallite diameter R2 of the tetragonal zirconia phase can be determined based on the full width at half maximum of a peak as the diffraction line width at $2\theta = 30.2°$ in the XRD measurement and the Scherrer equation. In the Scherrer equation, D is the crystallite size (nm), $\lambda$ is the wavelength (nm) of X-rays (Cu-K$\alpha$ ray) in the XRD measurement, B is the diffraction line width broadening (rad), and $\theta$ is the Bragg angle (rad). In addition, K is the Scherrer constant, which is 0.89. Specifically, the XRD measurement can be performed by a method to be described later regarding Examples.

Examples of the active metal include platinum group metals. Examples of the platinum group metal include palladium (Pd), platinum (Pt), iridium (Ir), and ruthenium (Ru). In view of ensuring catalytic activity, the active metal preferably includes at least one selected from the group consisting of Pd, Pt, and Ru, more preferably includes two selected from the group consisting of Pd, Pt, and Ru, even more preferably includes Pd, and Ru or Pt (Pd-Pt composite support, Pd-Ru composite support).

When the active metal includes Pd, the amount of Pd supported in the hydrocarbon oxidation catalyst is preferably 0.1% by mass or more, more preferably 0.5% by mass or more, even more preferably 0.7% by mass or more in view of catalytic activity for a hydrocarbon having a high ignition point such as methane. The amount of Pd supported is preferably less than 4% by mass, more preferably 3.5% by mass or less, even more preferably 3% by mass or less, particularly preferably 2.5% by mass or less in view of cost reduction. The amount of Pd supported may be 4% by mass as necessary, and is, for example, 8% by mass or less. The amount of Pd supported in the hydrocarbon oxidation catalyst is expressed as the mass percentage of the amount of Pd to the total amount of the catalyst carrier and the whole active metal supported thereon (the same applies to the active metal elements to be described later).

When the active metal includes Pt, the amount of Pt supported in the hydrocarbon oxidation catalyst is preferably 0.1% by mass or more, more preferably 0.5% by mass or more, even more preferably 0.7% by mass or more, even more preferably 0.9 % by mass or more, particularly preferably 1% by mass or more in view of ensuring catalytic activity. The amount of Pt supported is preferably 3% by mass or less, more preferably 2.5% by mass or less, even more preferably 2% by mass or less in view of cost reduction.

When the active metal includes Ru, the amount of Ru supported in the hydrocarbon oxidation catalyst is preferably 1% by mass or more, more preferably 2% by mass or more, even more preferably 3% by mass or more in view of ensuring catalytic activity. The amount of Ru supported is preferably 7% by mass or less, more preferably 6% by mass or less, even more preferably 5.5% by mass or less in view of cost reduction.

When the active metal is a Pd-Pt composite support, the total amount of Pd and Pt supported in the hydrocarbon oxidation catalyst is preferably 0.2% by mass or more, more preferably 0.8% by mass or more, even more preferably 1% by mass or more in view of ensuring catalytic activity. The total amount of Pd and Pt supported is preferably less than 7% by mass, more preferably 6% by mass or less, even more preferably 5% by mass or less in view of cost reduction.

When the active metal is a Pd-Ru composite support, the total amount of Pd and Ru supported in the hydrocarbon oxidation catalyst is preferably 1.1% by mass or more, more preferably 2% by mass or more, even more preferably 3% by mass or more in view of ensuring catalytic activity. The total amount of Pd and Ru supported is preferably less than 11% by mass, more preferably 9% by mass or less, even more preferably 7.5% by mass or less in view of cost reduction.

A method for producing the hydrocarbon oxidation catalyst as an embodiment of the present invention includes the following steps.

First, a slurry containing a catalyst carrier raw material including zirconia, and an active metal is prepared (first step). For example, a powdery catalyst carrier raw material including zirconia is suspended in a solution containing the active metal (active metal-containing solution), and the suspension is continuously stirred. The stirring temperature is, for example, from 5°C to 35°C. The stirring time is, for example, from 15 to 21 hours depending on the amount of preparation.

Examples of the active metal include platinum group metals. Examples of the platinum group metal include Pd, Pt, Ru, Os, Rh, and Ir. The active metal preferably includes at least one selected from the group consisting of Pd, Pt, and Ru, more preferably includes Pd or Ru, and Pt in view of ensuring catalytic activity. The active metal-containing solution is, for example, an aqueous solution of nitrates, chlorides, or acetates of these active metals.

The zirconia in the catalyst carrier raw material contains a monoclinic zirconia phase and a tetragonal zirconia phase. The ratio (P2/P1) of the peak intensity P2 of the tetragonal zirconia phase to the peak intensity P1 of the monoclinic zirconia phase in the XRD measurement is 0.005 or more and 0.85 or less, and the monoclinic zirconia phase has a crystallite diameter of 35 Å or more and 115 Å or less. The ratio (P2/P1) in this step is preferably 0.01 or more, more preferably 0.02 or more, and preferably 0.82 or less, more preferably less than 0.8. The crystallite diameter R1 in this step is preferably 40 Å or more, more preferably 45 Å or more, and preferably 100 Å or less, more preferably 90 Å or less. The crystallite diameter R2 in this step is preferably 35 Å or more, more preferably 40 Å or more, and preferably 115 Å or less, more preferably 80 Å or less.

In the first step, as the catalyst carrier raw material, oxoacid zirconia oxide is preferably used, more preferably at least one selected from the group consisting of sulfated zirconia and tungstated zirconia is used. As the catalyst carrier raw material, a commercially available product may be used, or a calcined product of a precursor of the catalyst carrier raw material may be used. Examples of the precursor of the catalyst carrier raw material include amorphous zirconia, zirconium hydroxide sol, zirconium hydroxide gel, zirconium lactate, and zirconium alkoxide. When oxoacid zirconia is used as the catalyst carrier raw material, examples of the precursor of the catalyst carrier raw material include amorphous zirconia, zirconium hydroxide sol, zirconium hydroxide gel, zirconium lactate, or a mixture of zirconium alkoxide and oxo acid. Examples of the oxo acid include sulfuric acid, tungstic acid, titanic acid, and phosphoric acid.

Next, the slurry obtained in the first step is dried to obtain a powder (second step). The drying temperature is, for example, 80°C or more, preferably 100°C or more, and for example, 150°C or less, preferably 130°C or less. The drying time is, for example, 1 hour or more, preferably 3 hours or more, and for example, 9 hours or less, preferably 7 hours or less.

Next, the powder obtained in the second step is calcined at a temperature of 400°C or more and 600°C or less (third step). The calcination temperature in this step is preferably 450°C or more, more preferably 480°C or more, and preferably 550°C or less, more preferably 520°C or less. The calcination time is preferably 3 hours or more, more preferably 5 hours or more, and preferably 20 hours or less, more preferably 15 hours or less. These calcination conditions are suitable for suppressing changes in the above-described ratio (P2/P1) and the crystallite diameters R1 and R2 for the zirconia in the catalyst carrier raw material, and thus suitable for obtaining the hydrocarbon oxidation catalyst described above.

The resulting hydrocarbon oxidation catalyst may be milled. Examples of the milling method include compression milling. The milled hydrocarbon oxidation catalyst may be sieved to separate out the hydrocarbon oxidation catalyst of a desired size. The hydrocarbon oxidation catalyst before or after milling may be compression-molded into a predetermined shape. Examples of the shape of the hydrocarbon oxidation catalyst include a spherical shape, a tablet-like (pill-like) shape, and a honeycomb-like shape (monolithic body).

For example, in the manner described above, the hydrocarbon oxidation catalyst can be produced.

A hydrocarbon processing method as an embodiment of the present invention includes a step (contact processing step) of bringing the hydrocarbon into contact with the above-described hydrocarbon oxidation catalyst. In the contact processing step, for example, gas such as exhaust gas containing hydrocarbon (hydrocarbon-containing gas) is brought into contact with the hydrocarbon oxidation catalyst. The hydrocarbon-containing gas may be brought into contact with the hydrocarbon oxidation catalyst as a fixed bed placed in a given vessel or may be brought into contact with the hydrocarbon oxidation catalyst as a fluidized bed placed in a given vessel. The processing temperature in the contact processing step is, for example, from 190°C to 550°C. The flow rate of the hydrocarbon-containing gas in the contact processing step is, for example, 100 $Nm^3$/h or more and, for example, 480000 $Nm^3$/h or less.

In the hydrocarbon oxidation catalyst of the present invention, as described above, the ratio (P2/P1) of the peak intensity P2 of the tetragonal zirconia phase to the peak intensity P1 of the monoclinic zirconia phase by the XRD measurement in the zirconia supporting the active metal is 0.005 or more and less than 0.8, and the crystallite diameter R1 of the monoclinic zirconia phase is 35Å or more and 115Å or less. Such hydrocarbon oxidation catalyst is suitable for achieving good catalyst performance while suppressing the amount of the active metal supported. Specifically, the hydrocarbon oxidation catalyst is as described in Examples and Comparative Examples below. The above-described hydrocarbon processing method including the step of bringing hydrocarbon into contact with such hydrocarbon oxidation catalyst is suitable for efficiently decomposing the hydrocarbon.

Example

Hereinafter, the present invention will be described more in detail with reference to Examples, but not limited to the Examples. The specific numerical values in mixing ratio (content ratio), property value, and parameter used in the following description can be replaced with upper limit values (numerical values defined as "or less" or "below") or lower limit values (numerical values defined as "or more" or "above") of corresponding numerical values in mixing ratio (content ratio), property value, and parameter described in the above-described

"DESCRIPTION OF THE EMBODIMENTS".

Example 1

First, a palladium(II) nitrate solution (trade name: "Low chlorine Pd nitrate solution", manufactured by Tanaka Kikinzoku Kogyo, K. K.), a tetraammineplatinum(II) nitrate solution (trade name: "TetraamminePt nitrate solution", manufactured by Tanaka Kikinzoku Kogyo, K. K.), and ion-exchange water were mixed to give an aqueous solution (metal solution preparation step). The mass ratio of palladium (Pd) to platinum (Pt) in this aqueous solution is 1 to 1. Next, powdery first sulfated zirconia (trade name "Z-3300", sulfated zirconia (1 wt% $SO_4$/$ZrO_2$) with 1% by mass of sulfuric acid, manufactured by Daiichi Kigenso Kagaku Kogyo Co., Ltd.) was added to the aqueous solution and then mixed to prepare a slurry (slurry preparation step). The amount of the sulfated zirconia in this slurry is 98 parts by mass per 2 parts by mass of a total of Pd and Pt. This slurry was then stirred at room temperature for about 16 hours. The slurry was then dried at 110°C to obtain a powder. The powder was then calcined at 500°C for 9 hours. In this manner, a hydrocarbon oxidation catalyst was produced. The catalyst was then compressed and milled, and thereafter, sieved to fractionate powders (hydrocarbon oxidation catalyst) having a particle size of 16 to 31 mesh (0.5 to 1.00 mm). In the manner described above, a hydrocarbon oxidation catalyst (catalyst carrier: 1 wt% $SO_4$/$ZrO_2$, active metal: 1.0 wt% Pd + 1.0 wt% Pt) of Example 1 in powder form was prepared.

Examples 2 and 3

A hydrocarbon oxidation catalyst (catalyst carrier: 2 wt% $SO_4$/$ZrO_2$, active metal: 1.0 wt% Pd + 1.0 wt% Pt) of Example 2 in powder form and a hydrocarbon oxidation catalyst (catalyst carrier: 3 wt% $SO_4$/$ZrO_2$, active metal: 1.0 wt% Pd + 1.0 wt% Pt) of Example 3 in powder form were prepared in the same manner as for the catalyst of Example 1, except the following. In the slurry preparation step in Example 2, powdery second sulfated zirconia (trade name "Z-3301", sulfated zirconia with 2% by mass of sulfuric acid (2 wt% $SO_4$/$ZrO_2$), manufactured by Daiichi Kigenso Kagaku Kogyo Co., Ltd.) was used instead of the first sulfated zirconia. In the slurry preparation step in Example 3, powdery third sulfated zirconia (trade name "Z-2964", sulfated zirconia with 3% by mass of sulfuric acid (3 wt% $SO_4$/$ZrO_2$), manufactured by Daiichi Kigenso Kagaku Kogyo Co., Ltd.) was used instead of the first sulfated zirconia.

Example 4

A hydrocarbon oxidation catalyst (catalyst carrier: 3 wt% $SO_4/ZrO_2$, active metal: 2.0 wt% Pd + 1.0 wt% Pt) of Example 4 in powder form was prepared in the same manner as for the catalyst of Example 1, except the following. In the metal solution preparation step, the mass ratio of Pd to Pt in the aqueous solution was set at 2 to 1. In the slurry preparation step, powdery third sulfated zirconia (trade name "Z-2964") was used instead of the first sulfated zirconia, and the amount of the sulfated zirconia was set to 97 parts by mass per 3 parts by mass of a total of Pd and Pt.

Example 5

A hydrocarbon oxidation catalyst (catalyst carrier: 3 wt% $SO_4/ZrO_2$, active metal: 2.0 wt% Pd + 2.0 wt% Pt) of Example 5 in powder form was prepared in the same manner as for the catalyst of Example 1, except the following. In the slurry preparation step, powdery third sulfated zirconia (trade name "Z-2964") was used instead of the first sulfated zirconia, and the amount of the sulfated zirconia was set to 96 parts by mass per 4 parts by mass of a total of Pd and Pt.

Example 6

A hydrocarbon oxidation catalyst (catalyst carrier: 10 wt% $WO_3/ZrO_2$, active metal: 1.0 wt% Pd + 1.0 wt% Pt) of Example 6 in powder form was prepared in the same manner as for the catalyst of Example 1, except the following. In the slurry preparation step, powdery tungstated zirconia (trade name "Z-2233", tungstated zirconia with 10% by mass of tungstic acid (10 wt% $WO_3/ZrO_2$), manufactured by Daiichi Kigenso Kagaku Kogyo Co., Ltd.) was used instead of the first sulfated zirconia, and the amount of the tungstated zirconia was set to 98 parts by mass per 2 parts by mass of a total of Pd and Pt.

Example 7

A hydrocarbon oxidation catalyst (catalyst carrier: 10 wt% $WO_3/ZrO_2$, active metal: 2.0 wt% Pd + 1.0 wt% Pt) of Example 7 in powder form was prepared in the same manner as for the catalyst of Example 1, except the following. In the metal solution preparation step, the mass ratio of Pd to Pt in the aqueous solution was set at 2 to 1. In the slurry preparation step, powdery tungstated zirconia (trade name "Z-2233", manufactured by Daiichi Kigenso Kagaku Kogyo Co., Ltd.) was used instead of the first sulfated zirconia, and the amount of the tungstated zirconia was set to 97 parts by mass per 3 parts by mass of a total of Pd and Pt.

Example 8

A hydrocarbon oxidation catalyst (catalyst carrier: 1 wt% $SO_4/ZrO_2$, active metal: 1.0 wt% Pd + 2.0 wt% Pt) of Example 8 in powder form was prepared in the same manner as for the catalyst of Example 1, except the following. In the metal solution preparation step, the mass ratio of Pd to Pt in the aqueous solution was set at 1 to 2. In the slurry preparation step, the amount of the first sulfated zirconia was set to 97 parts by mass per 3 parts by mass of a total of Pd and Pt.

Example 9

A hydrocarbon oxidation catalyst (catalyst carrier: 1 wt% $SO_4/ZrO_2$, active metal: 2.0 wt% Pd + 1.0 wt% Pt) of Example 9 in powder form was prepared in the same manner as for the catalyst of Example 1, except the following. In the metal solution preparation step, the mass ratio of Pd to Pt in the aqueous solution was set at 2 to 1. In the slurry preparation step, the amount of the first sulfated zirconia was set to 97 parts by mass per 3 parts by mass of a total of Pd and Pt.

Example 10

A hydrocarbon oxidation catalyst (catalyst carrier: 1 wt% $SO_4/ZrO_2$, active metal: 2.0 wt% Pd + 5.0 wt% Ru) of Example 10 in powder form was prepared in the same manner as for the catalyst of Example 1, except the following. In the metal solution preparation step, a ruthenium nitrate solution (manufactured by Tanaka Kikinzoku Kogyo K. K.) was used instead of the tetraammineplatinum nitrate solution. The mass ratio of Pd to Ru in the aqueous solution obtained in the metal solution preparation step is 2 to 5. In the slurry preparation step, the amount of the first sulfated zirconia was set to 93 parts by mass per 7 parts by mass of a total of Pd and Ru.

Comparative Example 1

A hydrocarbon oxidation catalyst (catalyst carrier: m-ZrO$_2$, active metal: 1.0 wt% Pd + 1.0 wt% Pt) of Comparative Example 1 in powder form was prepared in the same manner as for the catalyst of Example 1, except the following. In the slurry preparation step, powdery zirconia (trade name "RC-100", monoclinic zirconia (m-ZrO$_2$), manufactured by Daiichi Kigenso Kagaku Kogyo Co., Ltd.) was used instead of the first sulfated zirconia, and the amount of the zirconia was set to 98 parts by mass per 2 parts by mass of a total of Pd and Pt.

Comparative Examples 2, 3, and 4

A hydrocarbon oxidation catalyst (catalyst carrier: 5 wt% SO$_4$/ZrO$_2$, active metal: 1.0 wt% Pd + 1.0 wt% Pt) of Comparative Example 2 in powder form, a hydrocarbon oxidation catalyst (catalyst carrier: 6 wt% SO$_4$/ZrO$_2$, active metal: 1.0 wt% Pd + 1.0 wt% Pt) of Comparative Example 3 in powder form, and a hydrocarbon oxidation catalyst (catalyst carrier: 10 wt% SO$_4$/ZrO$_2$, active metal: 1.0 wt% Pd + 1.0 wt% Pt) of Comparative Example 4 in powder form were prepared in the same manner as for the catalyst of Example 1, except the following. In the slurry preparation step in Comparative Example 2, powdery fourth sulfated zirconia (trade name "Z-3314", sulfated zirconia with 5% by mass of sulfuric acid (5 wt% SO$_4$/ZrO$_2$), manufactured by Daiichi Kigenso Kagaku Kogyo Co., Ltd.) was used instead of the first sulfated zirconia. In the slurry preparation step in Comparative Example 3, powdery fifth sulfated zirconia (trade name "Z-3294", sulfated zirconia with 6% by mass of sulfuric acid (6 wt% SO$_4$/ZrO$_2$), manufactured by Daiichi Kigenso Kagaku Kogyo Co., Ltd.) was used instead of the first sulfated zirconia. In the slurry preparation step in Comparative Example 4, powdery sixth sulfated zirconia (trade name "Z-3295", sulfated zirconia with 10% by mass of sulfuric acid (10 wt% SO$_4$/ZrO$_2$), manufactured by Daiichi Kigenso Kagaku Kogyo Co., Ltd.) was used instead of the first sulfated zirconia.

Comparative Example 5

A hydrocarbon oxidation catalyst (catalyst carrier: 30 wt% TiO$_2$/ZrO$_2$, active metal: 1.0 wt% Pd + 1.0 wt% Pt) of Comparative Example 5 in powder form was prepared in the same manner as for the catalyst of Example 1, except the following. In the slurry preparation step, powdery titanated zirconia (trade name "30 wt% TiO$_2$/ZrO$_2$", titanated zirconia with 30% by mass of titanic acid (30 wt% TiO$_2$/ZrO$_2$), manufactured by Daiichi Kigenso Kagaku Kogyo Co., Ltd.) was used instead of the first sulfated zirconia, and the amount of the titanated zirconia was set to 98 parts by mass per 2 parts by mass of a total of Pd and Pt.

<X-ray diffraction measurement>

Powder samples of the hydrocarbon oxidation catalysts of Examples 1 to 10 and Comparative Examples 1 to 5 were analyzed by X-ray diffraction (XRD) to determine the peak intensity P1 of the monoclinic zirconia (m-ZrO$_2$) phase, the peak intensity P2 of the tetragonal zirconia (t-ZrO$_2$) phase, the crystallite diameter R1 of the m-ZrO$_2$ phase, and the crystallite diameter R2 of the t-ZrO$_2$ phase. In this analysis, the crystal structure was analyzed by the Bragg-Brentano method using an X-ray diffraction analyzer "Ultima IV" and an X-ray detector "D/teX Ultra" (both manufactured by Rigaku Corporation). A CuK$\alpha$ ray ($\lambda$ = 1.54815 Å, Ni filter, applied power: 40 kV, 40 mA) was used as the X-ray source, with a scanning range of 5° to 90° in 2$\theta$, a scanning speed of 5.0°/min, a sampling width of 0.01°, a divergence slit of 0.20 mm, a divergence vertical limit slit of 2 mm, a scattering slit of 2°, a receiving slit of 0.15 mm, and an offset angle of 0°.

The analysis was performed using a Rigaku's analysis software "PDXI, 2 (Version 2.7.2.0)". The peak intensity P1 of the m-ZrO$_2$ phase is an integrated intensity (cps·deg) of the X-ray diffraction signal having a diffraction peak at 2$\theta$ = 28.1° ($\theta$ is the Bragg angle) and is a value obtained by integrating the intensity (cps) over a range of integration widths (deg) calculated by the analysis software for the diffraction peak. The peak intensity P2 of the t-ZrO$_2$ phase is an integrated intensity (cps·deg) of the X-ray diffraction signal having a diffraction peak at 2$\theta$ = 30.2° and is a value obtained by integrating the intensity (cps) over a range of integration widths (deg) calculated by the analysis software for the diffraction peak. The crystallite diameter R1 of the m-ZrO$_2$ phase was determined based on the full width at half maximum of the peak as the diffraction line width at 2$\theta$ = 28.1° and the following Scherrer equation. The crystallite diameter R2 of the t-ZrO$_2$ phase was determined based on the full width at half maximum of the peak as the diffraction line width at 2$\theta$ = 30.2° and the following Scherrer equation. In the Scherrer equation, D is the crystallite size (nm), $\lambda$ is the wavelength (nm) of X-rays (Cu-K$\alpha$ ray), B is the diffraction line width broadening (rad), and $\theta$ is the Bragg angle (rad). In addition, K is the Scherrer constant, which was 0.89.

$$\text{Scherrer equation: } D = K\lambda/B\cos\theta$$

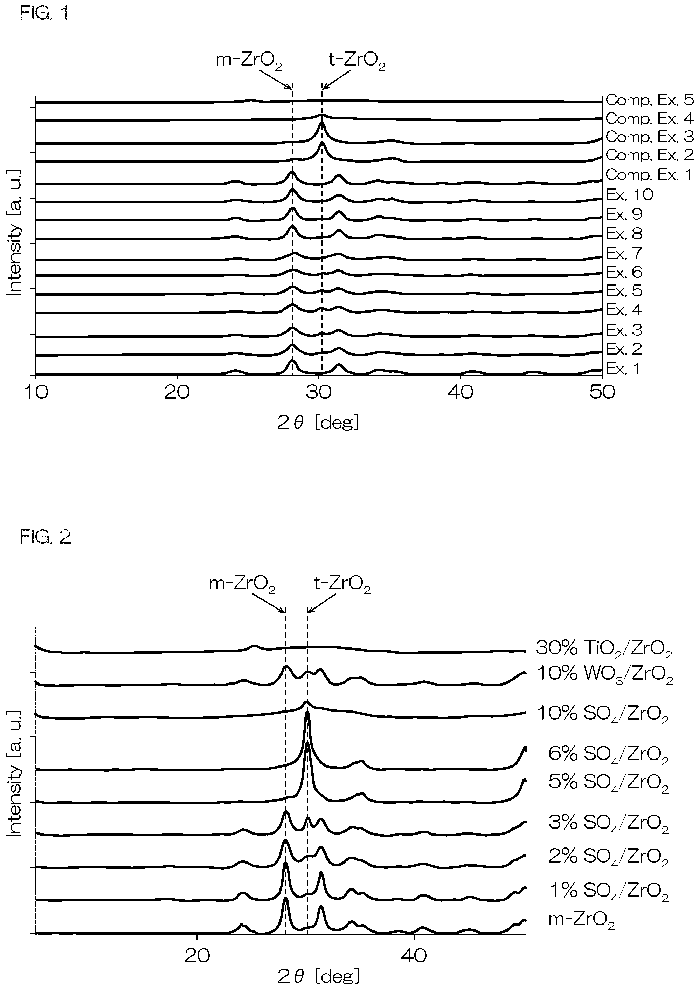

The measurement results are shown in Tables 1 and 2. The ratio (P2/P1) of the peak intensity P2 of the $t$-$ZrO_2$ phase to the peak intensity P1 of the $m$-$ZrO_2$ phase are also shown in Tables 1 and 2. FIG. 1 shows XRD patterns obtained for hydrocarbon oxidation catalysts of Examples 1 to 10 and Comparative Examples 1 to 5. In the graph of FIG. 1, the abscissa represents $2\theta$ (deg) in the XRD measurement and the ordinate represents the XRD signal intensity.

On the other hand, the powder samples of the first to sixth sulfated zirconia, monoclinic zirconia, tungstated zirconia, and titanated zirconia described above, which were used as the catalyst carrier raw materials, were measured by XRD in the same manner as above, and the peak intensity P1 of the monoclinic zirconia ($m$-$ZrO_2$) phase, the peak intensity P2 of the tetragonal zirconia ($t$-$ZrO_2$) phase, the crystallite diameter R1 of the $m$-$ZrO_2$ phase, and the crystallite diameter R2 of the $t$-$ZrO_2$ phase were determined. The results are shown in Table 3. FIG. 2 shows XRD patterns obtained for various zirconia used as the catalyst carrier raw materials. In the graph of FIG. 2, the abscissa represents $2\theta$ (deg) in the XRD measurement and the ordinate represents the XRD signal intensity.

<Catalytic performance>

A methane oxidation test was performed on each of the hydrocarbon oxidation catalysts of Examples 1 to 10 and Comparative Examples 1 to 5 to determine a methane oxidation rate at 400°C as the catalytic performance.

Specifically, the methane oxidation test was first performed at each of six temperature points (in increments of 30°C to 40°C) selected from a range of 290°C to 460°C to determine the methane oxidation rates. In the methane oxidation test, a fixed-bed reactor was first filled with the catalyst, and then the reactor was placed in the middle of a test gas flow path. Then, the test gas was heated to a predetermined temperature followed by being allowed to flow into the reactor. In the test gas used, the $CH_4$ concentration is 1000 ppmv (dry) (inlet concentration D1), the $O_2$ concentration is 12 vol% (wet), the NO concentration is 200 ppmv (dry), the $SO_2$ concentration is 0.2 ppmv (dry), the $H_2O$ concentration is 10 vol%, and the rest is $N_2$. In this test, the temperature in the reactor is 400°C, the pressure in the reactor is 0.2 MPa, the flow rate of the test gas is 1.0 NL/min, and the gas hourly space velocity (GHSV) of the test gas is 55000 $h^{-1}$. The gas hourly space velocity is calculated by dividing the flow rate ($Nm^3$/h) of the test gas by the catalyst volume ($m^3$). The methane concentration (outlet methane concentration D2) of the test gas that passed through the fixed-bed reactor under these conditions was measured. A gas chromatography system "GC-8A" (manufactured by Shimadzu Corporation) with a thermal conductivity detector (TCD) was used to quantify the methane concentration. In the measurement using the gas chromatography system, a 2.0 m × 3 dual packed column "Shincarbon-ST 50/80 mesh" (manufactured by Shinwa Chemical Industries Ltd.) was used as the column, He gas (flow rate 50 NmL/min) was used as the carrier gas, the column temperature was set to 180°C, and the detector temperature was set to 140°C. The methane oxidation rate expressed by the following equation was then obtained from the inlet concentration D1 and outlet concentration D2 of methane.

Methane oxidation rate (%) = [(inlet concentration D1 - outlet concentration D2)/inlet concentration D1] × 100

Next, the rate constant k ($h^{-1}$) in the methane oxidation reaction at a predetermined temperature was obtained by substituting the methane oxidation rate into the following equation (1). The GHSV in the equation (1) is the gas hourly space velocity as described above. In the manner described above, the rate constants k at the above-described six temperature points were obtained.

$$k = -GHSV \times \ln(1 - \text{methane oxidation rate}/100) \quad (1)$$

Then, based on the rate constants k at the above-described six temperature points, the Arrhenius equation for the methane oxidation reaction using a predetermined catalyst was identified by the Arrhenius plot method, and the rate constant k ($h^{-1}$) was obtained at 400°C in the Arrhenius equation. The methane ($CH_4$) oxidation rate at 400°C was then obtained from the value and the above equation (1). The values are shown in Tables 1 and 2.

The methane oxidation activity ratio expressed by the following equation (2) was obtained. In the equation (2), $k_0$ is a value of the rate constant k (400°C) of the hydrocarbon oxidation catalyst in Comparative Example 1. That is, the methane oxidation activity ratio is a ratio of the rate constant k (400°C) of each of the hydrocarbon oxidation catalysts to the rate constant k (400°C) of the hydrocarbon oxidation catalyst of Comparative Example 1. The values are shown in Tables 1 and 2.

$$\text{Methane oxidation activity ratio} = k/k_0 \quad (2)$$

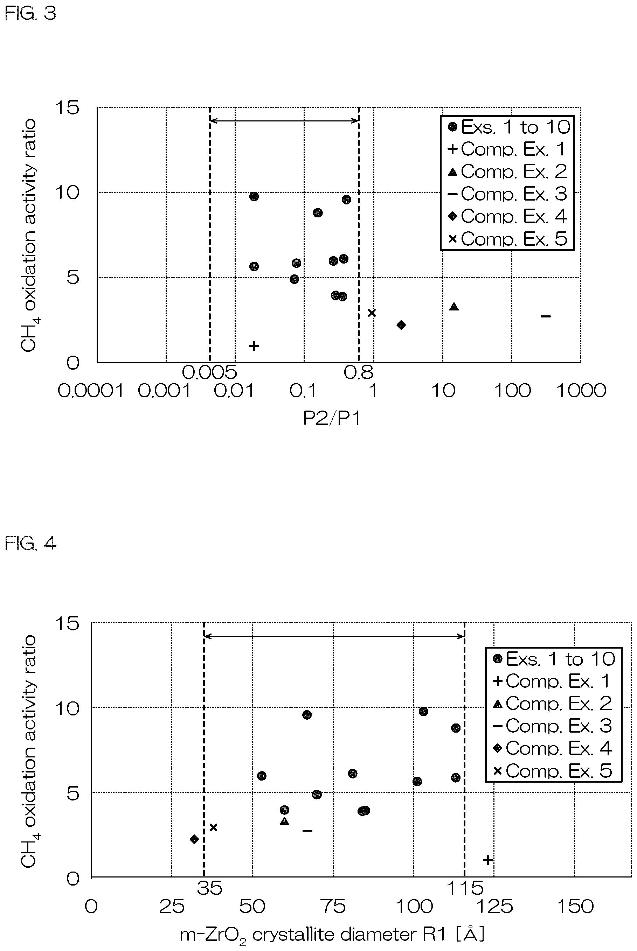

FIG. 3 is a graph showing a correlation between the methane oxidation activity ratio and the ratio (P2/P1) of the peak intensity P2 of the tetragonal zirconia phase to the peak intensity P1 of the monoclinic zirconia phase in the XRD measurement for the hydrocarbon oxidation catalysts of Examples 1 to 10 and Comparative Examples 1 to 5. In the graph in FIG. 3, the abscissa represents the ratio (P2/P1) and the ordinate represents the methane oxidation activity ratio. FIG. 4 is a graph showing a correlation between the methane oxidation activity ratio and the crystallite diameter R1 of the monoclinic zirconia phase for the hydrocarbon oxidation catalysts of Examples 1 to 10 and Comparative Examples 1 to 5. In the graph in FIG. 4, the abscissa represents the crystallite diameter R1 (Å) of the monoclinic zirconia phase and the ordinate represents the methane oxidation activity ratio. As shown in FIGS. 3 and 4, the hydrocarbon oxidation catalysts of Examples 1 to 10, in which the ratio (P2/P1) was 0.005 or more and less than 0.8 and the crystallite diameter R1 of the monoclinic zirconia phase was 35Å or more and 115Å or less, exhibit higher methane oxidation activity than those of Comparative Examples 1 to 5, in which the ratio and the crystallite diameter R1 were not as above.

On the other hand, for each of the hydrocarbon oxidation catalysts of Examples 1 to 10 and Comparative Examples 1 to 5, a reaction temperature $T_{50}$ ($CH_4$) when the methane oxidation rate reached 50% was determined. Specifically, the rate constant k when the methane oxidation rate reached 50% was determined from the above equation (1), and the reaction temperature $T_{50}$ ($CH_4$) when the methane oxidation rate reached 50% was determined by substituting the k into the above Arrhenius equation identified as described above. The values are shown in Tables 1 and 2.

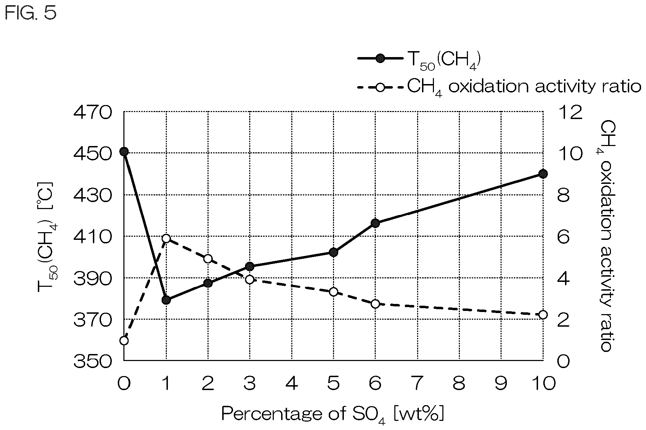

FIG. 5 is a graph showing a correlation between the methane oxidation activity ratio and the temperature $T_{50}$ ($CH_4$) relative to the percentage of sulfuric acid in the catalyst carrier for the hydrocarbon oxidation catalysts of Examples 1 to 3 and Comparative Examples 1 to 4. In the plot in the graph of FIG. 5, the percentage of sulfuric acid is 0% by mass (Comparative Example 1), 1% by mass (Example 1), 2% by mass (Example 2), 3% by mass (Example 3), 5% by mass (Comparative Example 2), 6% by mass (Comparative Example 3), or 10% by mass (Comparative Example 4). As shown in FIG. 5, the hydrocarbon oxidation catalysts of Examples 1 to 3 containing sulfated zirconia containing 3% by mass or less of sulfuric acid as the catalyst carrier exhibit higher methane oxidation activity than those of Comparative Examples 1 to 4 not containing such sulfated zirconia.

[Table 1]

[TABLE 1]

| \ | Composition Catalyst carrier Active metal | m-$ZrO_2$ phase | | t-$ZrO_2$ phase | | P2/P1 | $CH_4$ oxidation rate [%] | $cH_4$ oxidation activity ratio | $T_{50}$ ($CH_4$) [°C] |
|---|---|---|---|---|---|---|---|---|---|
| | | Peak intensity P1 leps × deg.] | Crystallite diameter R1 [Å] | Peak intensity P2 [cps × deg.] | Crystallite diameter R2 [Å] | | | | |
| Ex. 1 | 1 wt% $SO_4$/$ZrO_2$ 1 wt% Pd, 1 wt% Pt | 3664 | 113 | 279 | 81 | 0.076 | 69 | 5.9 | 379 |
| Ex. 2 | 2 wt% $SO_4$/$ZrO_2$ 1 wt% Pd, 1 wt% Pt | 3465 | 70 | 246 | 56 | 0.071 | 68 | 4.9 | 387 |
| Ex. 3 | 3 wt% $SO_4$/$ZrO_2$ 1 wt% Pd, 1 wt% Pt | 302-1 | 85 | 867 | 48 | 0.287 | 54 | 3.9 | 396 |
| Ex. 4 | 3 wt% $SO_4$/$ZrO_2$ 2 wt% Pd, 1 wt% Pt | 29.50 | 81 | 1090 | 52 | 0.369 | 71 | 6.1 | 378 |
| Ex. 5 | 3 wt% $SO_4$/$ZrO_2$ 2 wt% Pd, 2 wt% Pt | 2543 | 67 | 1016 | 45 | 0.400 | 85 | 9.6 | 365 |
| Ex. 6 | 10 wt% $WO_4$/$ZrO_2$ 1 wt% Pd, 1 wt% Pt | 2552 | 60 | 704 | 45 | 0.276 | 55 | 4.0 | 395 |
| Ex. 7 | 10 wt% $WO_4$/$ZrO_2$ 2 wt% Pd, 1 wt% Pt | 2607 | 53 | 668 | 43 | 0.256 | 70 | 6.0 | 375 |
| Ex. 8 | 1 wt% $SO_4$/$ZrO_2$ 1 wt% Pd, 2 wt% Pt | 3555 | 103 | 66 | 48 | 0.019 | 86 | 9.8 | 365 |

[Table 2]

[TABLE 2]

| | Composition Catalyst carrier Active metal | m-ZrO₂ phase | | t-ZrO₂ phase | | P2/P1 | $CH_4$ oxidation rate [%] | $CH_4$ oxidation activity ratio | $T_{50}$ $(CH_4)$ [°C] |
|---|---|---|---|---|---|---|---|---|---|
| | | Peak intensity P1 [cps × deg.] | Crystallite diameter R1 [Å] | Peak intensity P2 [cps × deg.] | Crystallite diameter R2 [Å] | | | | |
| Ex. 9 | 1 wt% $SO_4$/$ZrO_2$ 2 wt% Pd, 1 wt% Pt | 3368 | 113 | 517 | 83 | 0.154 | 79 | 8.8 | 365 |
| Ex. 10 | 1 wt% $SO_4$/$ZrO_2$ 2 wt% Pd, 5 wt% Ru | 3499 | 101 | 66 | 43 | 0.019 | 68 | 5.7 | 385 |
| Comp. Ex. 1 | m-$ZrO_2$ 1 wt% Pd, 1 wt% Pt | 3536 | 123 | 668 | 47 | 0.019 | 18 | 1.0 | 450 |
| Comp. Ex. 2 | 5 wt% $SO_4$/$ZrO_2$ 2 wt% Pd, 2 wt% Pt | 469 | 60 | 6818 | 72 | 14.537 | 45 | 3.3 | 402 |
| Comp. Ex. 3 | 6 wt% $SO_4$/$ZrO_2$ 2 wt% Pd, 1 wt% Pt | 24 | 67 | 7425 | 82 | 309.38 | 36 | 2.7 | 416 |
| Comp. Ex. 4 | 10 wt% $SO_4$/$ZrO_2$ 1 wt% Pd, 1 wt% Pt | 1185 | 32 | 2945 | 43 | 2.485 | 22 | 22 | 440 |
| Comp. Ex. 5 | 30 wt% $TIO_2$/$ZrO_2$ 1 wt% Pd, 1 wt% Pt | 933 | 38 | 863 | 16 | 0.925 | 49 | 2.9 | 407 |

[Table 3]

[TABLE 3]

| | Composition | m-ZrO$_2$ phase | | t-ZrO$_2$ phase | | P2/P1 |
|---|---|---|---|---|---|---|
| | | Peak intensity P1 [cps × deg.] | Crystallite diameter R1 [A] | Peak intensity P2 [cps × deg.] | Crystallite diameter R2 [Å] | |
| First sulfated zirconia (Z-3300) (Examples 1, 8, 9, and 10) | 1 wt% SO$_4$/ZrO$_2$ | 3369 | 80 | 67 | 50 | 0.020 |
| Second sulfated zirconia (Z-3301) (Example 2) | 2 wt% SO$_4$/ZrO$_2$ | 3333 | 84 | 1047 | 44 | 0.314 |
| Third sulfated zirconia (Z-2964) (Examples 3, 4, and 5) | 3 wt% SO$_4$/ZrO$_2$ | 2486 | 49 | 1074 | 45 | 0.432 |
| Fourth sulfated zirconia (Z-3314) (Comparative Example 2) | 5 wt% SO$_4$/ZrO$_2$ | 283 | 64 | 6733 | 81 | 23.79 |
| Fifth sulfated zirconia (Z-3294) (Comparative Example 3) | 6 wt% SO$_4$/ZrO$_2$ | 155 | 59 | 6145 | 71 | 39.65 |
| Sixth sulfated zirconia (Z-3295) (Comparative Example 4) | 10 wt% SO$_4$/ZrO$_2$ | 1556 | 38 | 1357 | 38 | 0.872 |
| Monoclinic zirconia (RC-100) (Comparative Example 1) | m-ZrO$_2$ | 3679 | 105 | 19 | 46 | 0.005 |
| Tungstated zirconia (Z-2233) (Examples 6 and 7) | 10 wt% WO$_4$/ZrO$_2$ | 2201 | 55 | 1800 | 47 | 0.818 |
| Titanated zirconia (Comparative Example 5) | 30 wt% TiO$_2$/ZrO$_2$ | 1831 | 24 | 579 | 24 | 0.316 |

Industrial Applicability

The hydrocarbon oxidation catalyst of the present invention can be used, for example, to remove unburned hydrocarbons from the exhaust gas of internal combustion engines operating with natural gas as fuel gas.

**Claims**

1. A hydrocarbon oxidation catalyst, being a catalyst for oxidizing hydrocarbon, the hydrocarbon oxidation catalyst comprising:

a catalyst carrier comprising zirconia; and
an active metal supported on the catalyst carrier,
wherein the zirconia comprises a monoclinic zirconia phase and a tetragonal zirconia phase,
a ratio of a peak intensity of the tetragonal zirconia phase to a peak intensity of the monoclinic zirconia phase in an X-ray diffraction measurement is 0.005 or more and less than 0.8, and the monoclinic zirconia phase has a crystallite diameter of 35Å or more and 115Å or less.

2. The hydrocarbon oxidation catalyst according to claim 1, wherein the catalyst carrier is oxoacid zirconia.

3. The hydrocarbon oxidation catalyst according to claim 1, wherein the oxoacid zirconia comprises at least one selected from the group consisting of sulfated zirconia and tungstated zirconia.

4. The hydrocarbon oxidation catalyst according to claim 1, wherein the active metal comprises at least one selected from the group consisting of palladium, platinum, and ruthenium.

5. The hydrocarbon oxidation catalyst according to any one of claims 1 to 4, wherein the active metal comprises palladium and an amount of the palladium supported is 0.1% by mass or more and less than 4% by mass.

6. A hydrocarbon processing method, comprising the step of bringing hydrocarbon into contact with the hydrocarbon oxidation catalyst according to any one of claims 1 to 4.

7. A method for producing a hydrocarbon oxidation catalyst, comprising:

a first step of preparing a slurry comprising a catalyst carrier raw material including zirconia, and an active metal;
a second step of drying the slurry to obtain a powder; and
a third step of calcining the powder at a temperature of 400°C or more and 600°C or less to produce the hydrocarbon oxidation catalyst according to any one of claims 1 to 4,
wherein the zirconia in the first step comprises a monoclinic zirconia phase and a tetragonal zirconia phase, a ratio of a peak intensity of the tetragonal zirconia phase to a peak intensity of the monoclinic zirconia phase in an X-ray diffraction measurement is 0.005 or more and 0.85 or less, and the monoclinic zirconia phase has a crystallite diameter of 35Å or more and 115Å or less.

FIG. 1

FIG. 2

FIG. 3

FIG. 4

FIG. 5

## INTERNATIONAL SEARCH REPORT

| International application No. |
| --- |
| **PCT/JP2022/032044** |

**A. CLASSIFICATION OF SUBJECT MATTER**

**B01J 27/053**(2006.01)i; **B01D 53/94**(2006.01)i; **B01J 23/652**(2006.01)i; **B01J 37/08**(2006.01)i
FI: B01J27/053 A; B01D53/94 280; B01J23/652 A; B01J37/08 ZAB

According to International Patent Classification (IPC) or to both national classification and IPC

**B. FIELDS SEARCHED**

Minimum documentation searched (classification system followed by classification symbols)

B01D53/73; B01D53/86-53/90; B01D53/94; B01D53/96; B01J21/00-38/74

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

JSTPlus/JST7580/JSTChina (JDreamIII)

**C. DOCUMENTS CONSIDERED TO BE RELEVANT**

| Category* | Citation of document, with indication, where appropriate, of the relevant passages | Relevant to claim No. |
| --- | --- | --- |
| X | WO 2020/196400 A1 (NATIONAL UNIV CORPORATION TOKAI NATIONAL HIGHER EDUCATION AND RESEARCH SYSTEM) 01 October 2020 (2020-10-01) paragraphs [0079], [0099], [0106], [0110]-[0112], fig. 5-6 | 1, 4-7 |
| A | | 2-3 |
| X | SILVA, Fabiano de A. et al. The Effect of Pt Loading and Space Velocity on the Performance of Pt/CeZrO2/Al2O3 Catalysts for the Partial Oxidation of Methane. Stud. Surf. Sci. Catal. 2007, vol. 167, pp. 427-432 2. Experimental, 3. Beginning of results and discussion, table 1, fig. 1 | 1, 4, 6 |
| X | SILVA, F. A. et al. The effect of the use of cerium-doped alumina on the performance of Pt/CeO2/Al2O3 and Pt/CeZrO2/Al2O3 catalysts on the partial oxidation of methane. Appl. Catal. A. 12 November 2007, vol. 335, no. 2, pp. 145-152, DOI: 10.1016/j.apcata.2007.11.003 2.1 Catalysts preparation, 3.2 X-ray diffraction (XRD), table 1, fig. 1 | 1, 4, 6 |
| A | JP 2004-223381 A (HITACHI ZOSEN CORP) 12 August 2004 (2004-08-12) entire text | 1-7 |

☑ Further documents are listed in the continuation of Box C.    ☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **18 October 2022** | **01 November 2022** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

## INTERNATIONAL SEARCH REPORT

| International application No. |
|---|
| **PCT/JP2022/032044** |

**C.  DOCUMENTS CONSIDERED TO BE RELEVANT**

| Category* | Citation of document, with indication, where appropriate, of the relevant passages | Relevant to claim No. |
|---|---|---|
| A | JP 2019-534777 A (SHELL INTERNATIONALE RESEARCH MAATSCHAPPIJ B.V) 05 December 2019 (2019-12-05)<br>entire text | 1–7 |
| A | WU, Yang et al. Phase transformation and oxygen vacancies in Pd/ZrO2 for complete methane oxidaion under lean conditions. J. Catal. 21 August 2019, vol. 377, pp. 565-576, DOI: 10.1016/j.cat.2019.04.047<br>entire text | 1–7 |

Form PCT/ISA/210 (second sheet) (January 2015)

INTERNATIONAL SEARCH REPORT
Information on patent family members

International application No.

**PCT/JP2022/032044**

| Patent document cited in search report | | | Publication date (day/month/year) | Patent family member(s) | | | Publication date (day/month/year) |
|---|---|---|---|---|---|---|---|
| WO | 2020/196400 | A1 | 01 October 2020 | (Family: none) | | | |
| JP | 2004-223381 | A | 12 August 2004 | (Family: none) | | | |
| JP | 2019-534777 | A | 05 December 2019 | US | 2021/0283581 | A1 | |
| | | | | the whole document | | | |
| | | | | WO | 2018/041630 | A1 | |
| | | | | EP | 3507008 | A1 | |
| | | | | AU | 2017318277 | A | |
| | | | | CA | 3035127 | A | |
| | | | | SG | 11201901348X | A | |
| | | | | KR | 10-2019-0040491 | A | |
| | | | | CN | 109689208 | A | |
| | | | | BR | 112019004067 | A | |
| | | | | DK | 3507008 | T | |
| | | | | PL | 3507008 | T | |
| | | | | ES | 2899404 | T | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2018510767 W